# EUROPEAN PATENT SPECIFICATION

(11) **EP 3 791 951 B1**
(45) Date of publication and mention of the grant of the patent: **20.04.2022**
(21) Application number: 19196627.4
(22) Date of filing: 11.09.2019
(51) Int. Cl.: B01D 53/04, B01D 53/26, H01F 27/14

(54) **A BREATHER DEVICE FOR DEHUMIDIFYING AIR TO BE SUPPLIED TO AN EXPANSION VESSEL OF A POWER ELECTRICAL APPARATUS**
ENTLÜFTERVORRICHTUNG ZUR TROCKNUNG VON LUFT WELCHE IN EINEN ENTSPANNUNGSBEHÄLTER EINER ELEKTRISCHE LEISTUNGSEINRICHTUNG GESPEIST WIRD
DISPOSITIF DE RENIFLARD POUR DÉSHUMIDIFIER DE L'AIR FOURNI À UN RÉSERVOIR D'EXPANSION D'UN APPAREIL ÉLECTRIQUE

(43) Date of publication of application: 17.03.2021
(73) Proprietor: COMEM S.p.A., 36054 Montebello Vicentino (VI) (IT)
(72) Inventor: Ugolin, Gianmaria, 36054 Montebello Vicentino (VI) (IT); Carollo, Carlo, 36054 Montebello Vicentino (VI) (IT); Nucci, Francesca, 36054 Montebello Vicentino (VI) (IT)
(74) Representative: Burchielli, Riccardo

(56) References cited:
- EP-A1- 0 828 103
- EP-A1- 2 514 511
- US-A1- 2018 185 781

## Description

The present invention relates to a breather device for a power electrical apparatus intended for use in electric power transmission and distribution installations, such as a power transformer, a load tap changer, a choke, and the like.

As it is known, breather devices are generally used in connection with power electrical apparatuses equipped with expansion vessels. These expansion vessels (which are constituted, for example, by the so-called conservators in the case of power transformers) have the function of compensating for the unavoidable volume changes of insulating liquid (e.g. insulating oil) used in such electrical apparatuses, which are mostly due to temperature fluctuations.

In general, an expansion vessel has its internal volume in fluid-dynamic communication with the tank of the power electrical apparatus and with the external atmosphere in such a way to be partially filled with insulating liquid and air that, in some cases, may be in direct contact. When it expands, the insulating liquid partially fills the expansion vessel and pushes air out of this latter whereas, when it reduces its overall volume, the insulating liquid retracts from the expansion vessel and air is sucked from the external environment.

In order to prevent deterioration of dielectric characteristics of the insulating fluid (e.g. the reduction of the breakdown voltage) due to contact with humid air, a power electrical apparatus is normally equipped with a breather device operatively coupled with the expansion vessel so that air expelled from or breathed in the expansion vessel is forced to pass through said breather device.

A breather device is normally filled with air-drying salts suitable to absorb moisture from air passing therethrough. In this way, accumulation of moisture in the expansion vessel and, more in general, in the tank of the power electrical apparatus is avoided or remarkably reduced.

As it is known, after a given number of breathing cycles, air-drying salts contained in a breather device may reach a saturation condition, in which they are no more capable of effectively absorbing moisture from circulating air. This entails that the breather device cannot carry out its dehumidifying functionalities anymore.

In this case, saturated air-drying salts have to be replaced with fresh moisture-absorbing material.

Alternatively, according to most recent solutions of the state of the art, breather devices may be equipped with suitable heaters that can be activated to carry out a heating regeneration process of the air-drying salts and restore their air-drying capabilities.

In some applications, particularly in railway installations, there are employed breather devices including multiple tanks filled with air-drying salts suitable to absorb moisture from air passing therethrough.

Normally, these breather devices comprise a valve arrangement in fluid-dynamic communication with each tank and configured to allow or prevent a flow of air coming from each tank to exit from the breather device in order to reach the expansion vessel.

In this way, the valve arrangement can selectively put each tank filled with air-drying salts in fluid-dynamic communication with the expansion vessel, depending on the saturation condition of said drying salts.

Although breather devices of this type generally perform their functionalities in a satisfying way, they still have some aspect to improve, particularly for what concerning the functionalities of the above-mentioned valve arrangement.

In addition, according to currently available solutions, the presence of said valve arrangements entails a remarkable increase of the overall size of the breather device. This aspect is particularly critical when the breather device is included in a power transformer installed on board a train, as in these applications available spaces are normally quite limited.

Moreover, a breather device for a power electrical apparatus having the technical features contained in the preamble of the appended claim 1 is known, for example, from US2018/185781 and EP2514511.

In the market, it is still felt the demand for innovative technical solutions capable of solving or mitigating the above-mentioned drawbacks.

In order to respond to this need, the present invention provides a breather device for a power electrical apparatus, according to the following claim 1 and the related dependent claims.

In a general definition, the breather device according to the invention comprises:
- an air demoisturizer unit including a first tank and a second tank. Each tank has an internal volume accommodating a moisture absorbing substance and it is in fluid-dynamic communication with the external environment;
- a main port adapted to be in fluid-dynamic communication with said expansion vessel;
- a valve assembly in fluid-dynamic communication with each tank and said main port.

According to the invention, in operation, the valve assembly is adapted to take a first operating condition, in which it allows air coming from the first tank to reach said main port and it prevents air coming from the second tank to reach said main port, or a second operating condition, in which it prevents air coming from the first tank to reach said main port and it allows air coming from the second tank to reach said main port.

According to the invention, in operation, the valve assembly is adapted to switch reversibly between said first and second operating conditions in response to feeding signals received from a power supply.

According to the invention, said valve assembly comprises valve means which comprise actuators operatively coupled to valve elements arranged at the inlets of said valve assembly wherein said actuators are provided with a permanent magnet as blocking means to block said valve elements in said first or second operating condition so reached.

According to the invention, in operation, the valve assembly is adapted to maintain stably said first operating condition or said second operating condition in case of outage of said power supply.

According to some embodiments of the invention, the valve assembly comprises first valve means adapted to take a first position corresponding to a first condition of said valve assembly, in which they allow air coming from the first tank to reach said main port, or a second position corresponding to a second condition of said valve assembly, in which they prevent air coming from the first tank to reach said main port.

Said first valve means are adapted to switch reversibly between said first operating position and said second operating position in response to first feeding signals received from said power supply.

Said first valve means are adapted to maintain stably said first operating position or said second operating position in case of outage of said power supply.

According to such an embodiment of the invention, the valve assembly further comprises second valve means adapted to take a third position corresponding to a first condition of said valve assembly, in which they prevent air coming from the second tank to reach said main port, or a fourth position corresponding to a second condition of said valve assembly, in which they allow air coming from the second tank to reach said main port.

Said second valve means are adapted to switch reversibly between said third operating position and said fourth operating position in response to second feeding signals received from said power supply.

Said second valve means are adapted to maintain stably said third operating position or said fourth operating position in case of outage of said power supply.

Preferably, said first valve means comprise a first actuator operatively coupled to a first valve element arranged at a first inlet of said valve assembly.

Preferably, said first actuator is a solenoid actuator.

Preferably, said second valve means comprise a second actuator operatively coupled to a second valve element arranged at a second inlet of said valve assembly.

Preferably, said second actuator is a solenoid actuator.

According to alternative embodiments of the invention, the valve assembly comprises third valve means adapted to take a fifth operating position corresponding to a first condition of said valve assembly, in which they allow air coming from the first tank to reach said main port and they prevent air coming from the second tank to reach said main port, or a sixth operating position corresponding to a second condition of said valve assembly, in which they prevent air coming from the first tank to reach said main port and said they allow air coming from the second tank to reach said main port.

Said third valve means are adapted to switch reversibly between said fifth operating position and said sixth operating position in response to third feeding signals received from said power supply. Said third valve means are adapted to maintain stably said fifth operating position or said sixth operating position, in case of outage of said power supply.

Preferably, said third valve means comprise a third actuator operatively coupled to third and fourth valve elements arranged at first and second inlets of said valve assembly.

Preferably, said third actuator is a solenoid actuator.

According to a further aspect of the invention, the above-mentioned valve assembly is arranged along a lateral wall of said air demoisturizer unit.

In yet a further aspect, the present invention relates to a power electrical apparatus, according to the following claim 11 and the related dependent claims.

Further characteristics and advantages of the present invention will be more apparent with reference to the description given below and to the accompanying figures, provided purely for explanatory and non-limiting purposes, wherein:

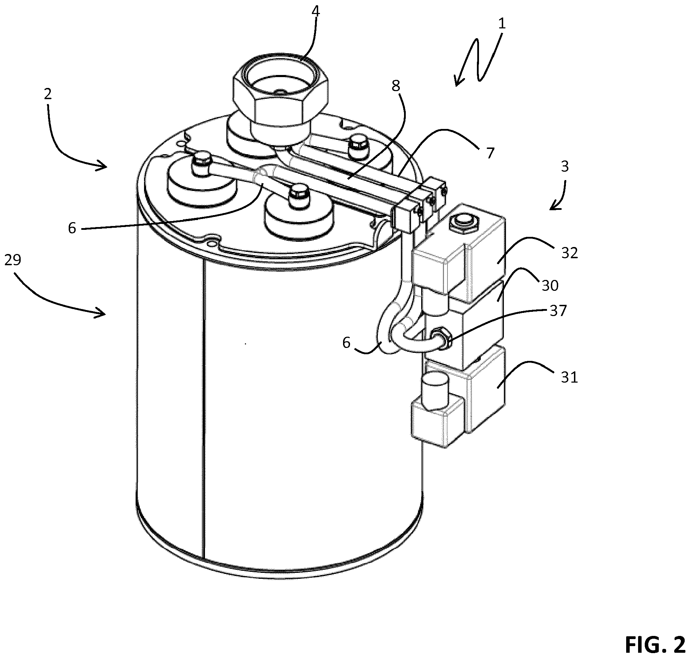

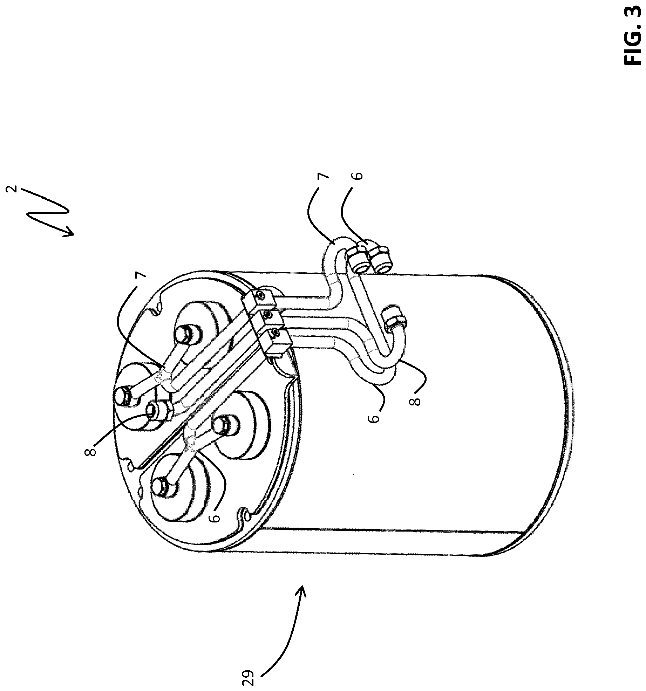

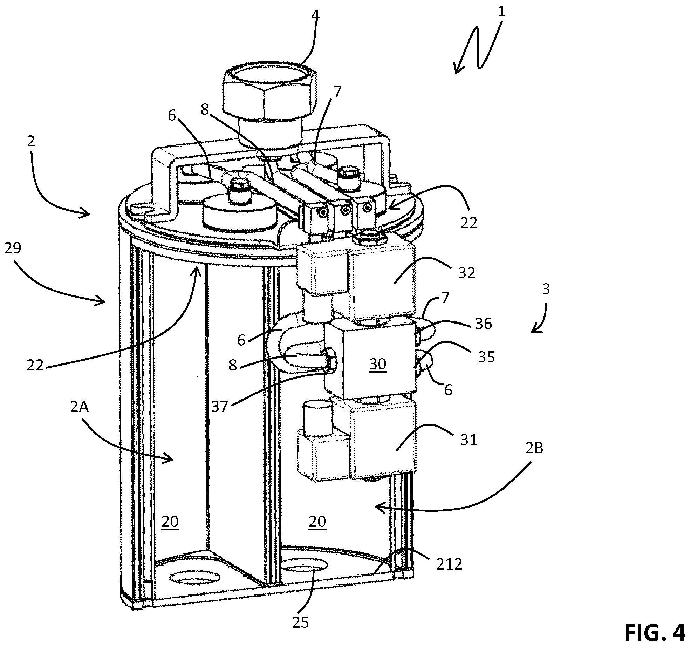

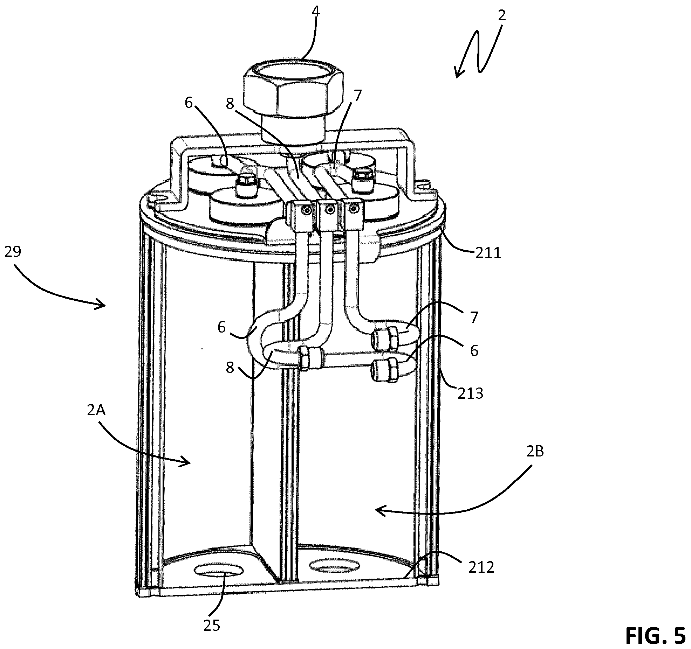

- Figs. 1-5 schematically illustrate an embodiment of the breather device, according to the present invention;
- Figs. 6-7 schematically illustrate operation of a valve assembly included in the breather device of Figs. 1-5;
- Figs. 8-9 schematically illustrate operation of a valve assembly included in a further embodiment of the breather device, according to the present invention.

With reference to the aforesaid figures, the breather device 1, according to the invention, will now be described in details.

In the following detailed description, identical components or elements are generally indicated by same reference numerals, regardless of whether they are shown in different embodiments. In order to clearly and concisely disclose the invention, the drawings may not necessarily be to scale and certain features of the invention may be shown in a schematic form.

For the sake of clarity, it is specified that, within the scope of the present invention, the expression "in fluid-dynamic communication" referred to some parts or components of the breather device of the invention has to be intended with reference to an operating condition, in which a fluid (e.g. air) can flow between said parts (through suitable ducts or ports).

The breather device 1 is intended for being employed in a power electrical apparatus equipped with an expansion vessel (not shown).

According to the invention, the breather device 1 comprises a main port 4 in fluid-dynamic communication with said expansion vessel.

Preferably, the main port 4 includes a suitable flange element that may be screwed to a suitable pipe of the power electrical apparatus.

As it is aimed at dehumidifying air to be supplied to the expansion vessel, the breather device 1 comprises an air demoisturizer unit 2.

According to the invention, the demoisturizer unit 2 includes at least a first tank 2A and a second tank 2B, which are preferably arranged side by side.

Preferably, the demoisturizer unit 2 comprises a main enclosure 29 that preferably develops along a main longitudinal axis 500, e.g. with a substantially cylindrical geometry.

Each tank 2A, 2B generally comprises a plurality of walls defining an internal volume 20 and forming, at least partially, the walls of the main enclosure 29 of the demoisturizer unit 2.

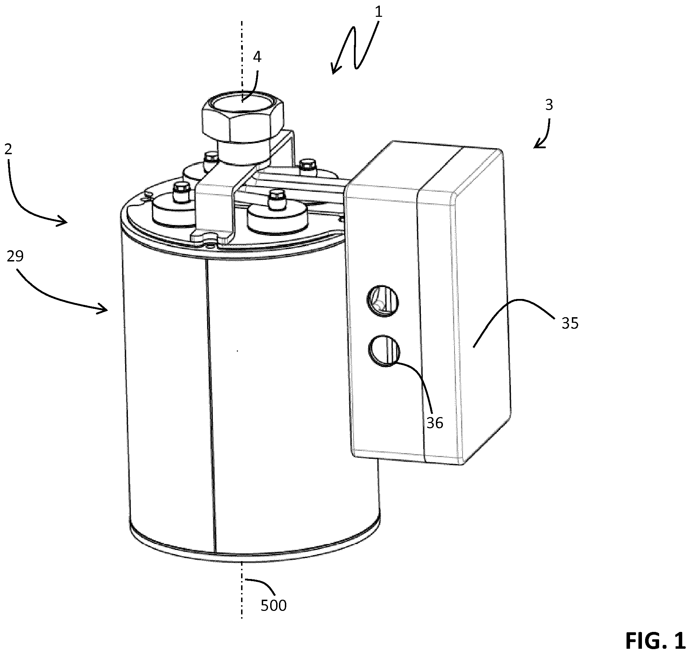

Preferably, referring to a normal operative positioning of the breather device 1 (as shown in figure 1), each tank 2A, 2B comprises a first upper wall 211 and a second lower wall 212 opposite one to another and a third lateral wall 213 arranged between the first and second walls 211, 212. Preferably, the lateral wall 213 of each tank 2A, 2B includes or it is internally covered by a layer of thermo-insulating material.

Preferably, when they are arranged side by side, the tanks 2A, 2B may include a common portion of lateral wall, as it is evident from the cited figures.

Preferably, each tank 2A, 2B comprises at least a first opening 25 configured to put the internal volume 20 of said tank in fluid-dynamic communication with the external environment. Conveniently, each first opening 25 forms an inlet opening to allow air coming from the external atmosphere to enter into the internal volume 20 of the corresponding tank 2A, 2B.

Preferably, each first opening 25 is arranged at the second lower wall 212 of the corresponding tank 2A, 2B.

According to some embodiments of the invention, each tank 2A, 2B includes a single fist opening 25 arranged at the second lower wall 212 of each tank 21. However, according to other embodiments of the invention (not shown), each tank 2A, 2B may include multiple fist openings 25.

Each tank 2A, 2B comprises at least a second opening 22 configured to allow a flow of dehumidified air to exit from the internal volume 20, during the normal operation of the breather device 1 (i.e. when this latter carries out its air dehumidifying functionalities).

Conveniently, each second opening 22 forms an outlet opening to allow dehumidified air to flow towards another section of the breather device 1 in fluid-dynamic communication with the expansion vessel.

Preferably, each second opening 22 is arranged at the first upper wall 211 of each tank 2A, 2B, thereby in distal position from the above-mentioned one or more first openings 25.

Preferably, each tank 2A, 2B includes a corresponding pair of second openings 22 arranged at the first upper wall 211 of each tank 21. However, according to other embodiments of the invention (not shown), each tank 2A, 2B may include a single second opening 22.

Preferably, in the internal volume 20 of each tank, the demoisturizer unit 2 comprises a moisture absorbing substance (not shown).

The above-mentioned moisture absorbing substance may be of known type, such as air-drying salts, e.g. silica gel.

Preferably, in the internal volume 20 of each tank, the demoisturizer unit 2 comprises a heater (not shown) for regenerating said moisture absorbing substance.

Each heater may be realized in a known manner as well. For example, it may be formed by a closed loop electrically resistive element (e.g. having a spiral-like shape) that has terminals electrically connectable to a power source.

According to the invention, the breather device 1 comprises a valve assembly 3 in fluid-dynamic communication with each tank 2A and the main port 4 of the breather device. Preferably, the valve assembly 3 comprises a main section 30 having a first inlet 35 and a second inlet 36 that are in fluid-dynamic communication with the first tank 2A and the second tank 2B of the demoisturizer unit 2, respectively.

In this way, the first and second inlets 35, 36 can receive air respectively coming from the first and second tanks 2A, 2B.

Conveniently, the breather device 1 comprises first shaped ducts 6 operatively coupling the second openings 22 of the first tank 2A with the first inlet 35 of the valve assembly 3 and second shaped ducts 7 operatively coupling the second openings 22 of the second tank 2B with the second inlet 35 of the valve assembly 3.

Preferably, the main section 30 of the valve assembly 3 comprises an outlet 37 in fluid-dynamic communication with the main port 4 of the breather device 1. Conveniently, the breather device 1 comprises third shaped ducts 8 operatively coupling the main port 4 with the outlet 37 of the valve assembly 3.

Preferably, the main section 30 of the valve assembly 3 comprises suitable internal ducts 30A operatively coupling the inlets 35, 36 and the outlet 37.

In general, the main valve assembly 3 is adapted to allow or prevent a flow of air coming from each tank 2A to reach the main port 4 and flow towards the expansion vessel of the power electrical apparatus.

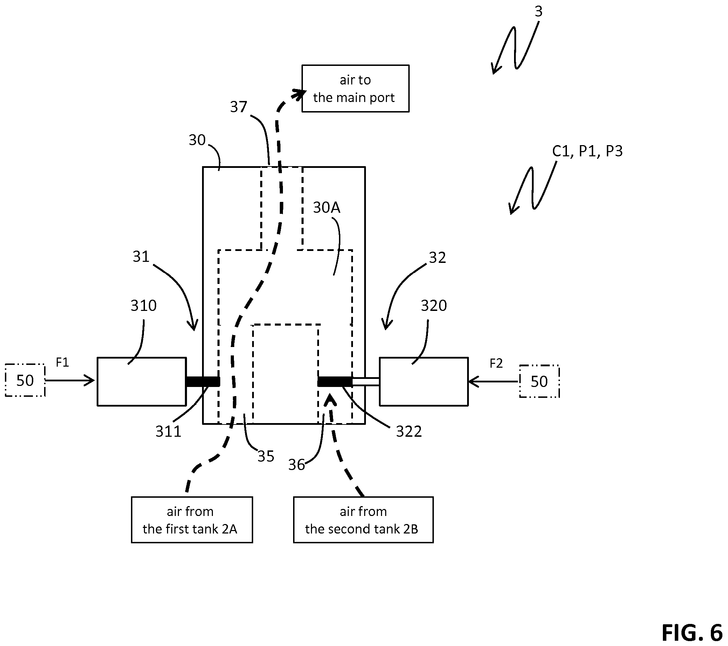

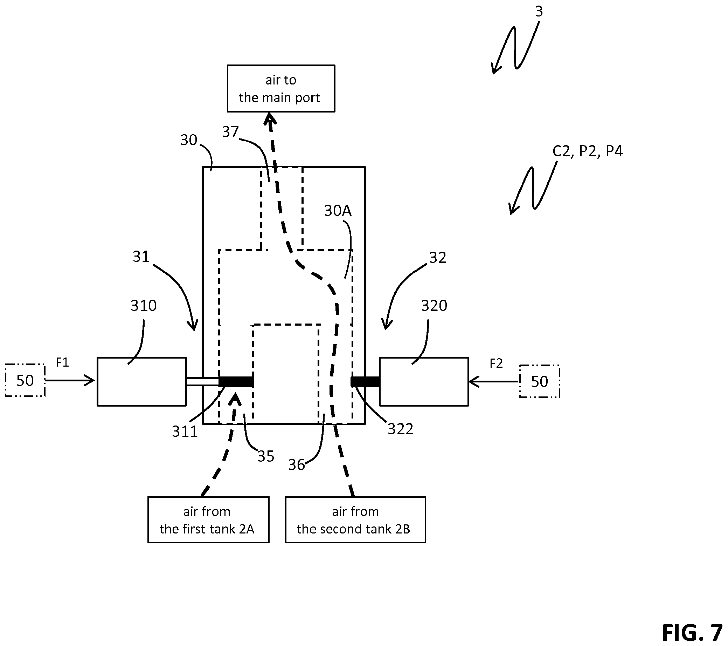

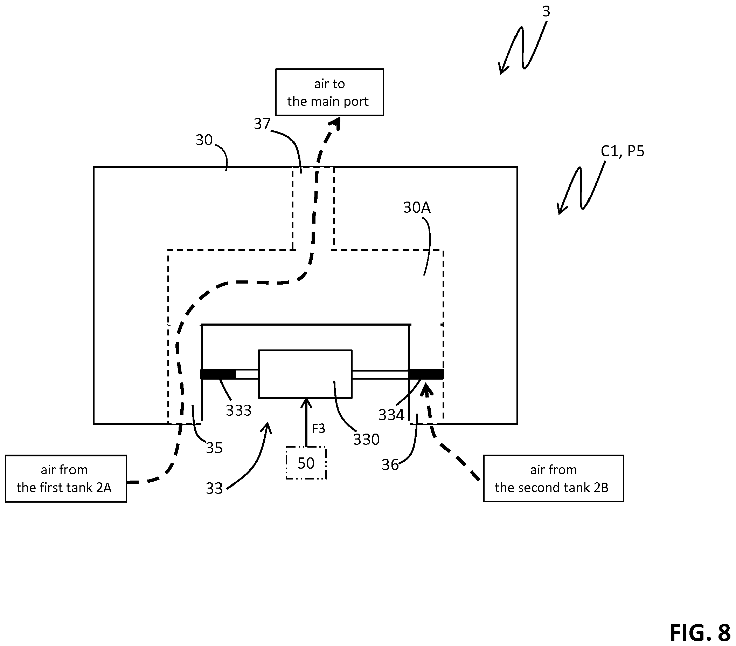

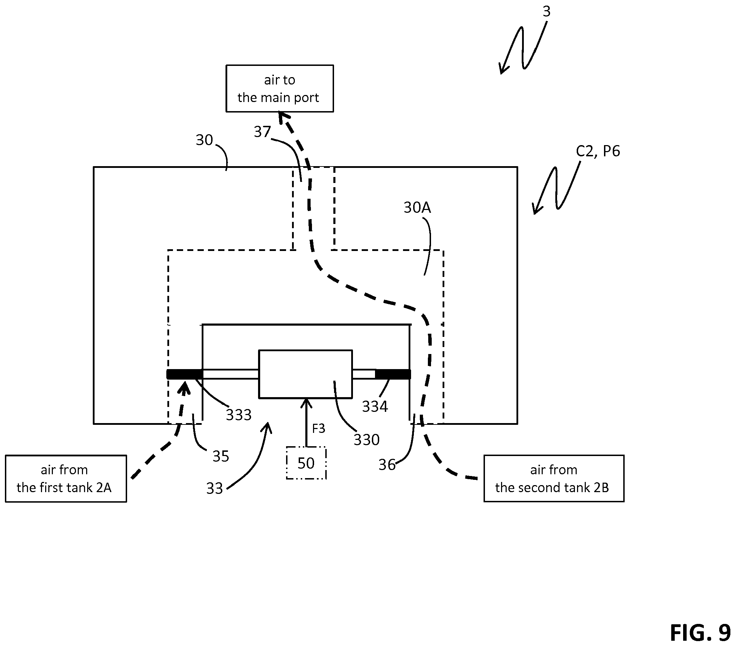

In particular, in operation, the valve assembly 3 can take:
- a first operating condition C1 (figures 6 and 8), in which a flow of air coming from the first tank 2A is allowed to reach the main port 4 and a flow of air coming from the second tank 2B is prevented to reach the main port 4;
- a second operating condition C2 (figures 7 and 9), in which a flow of air coming from the first tank 2A is prevented to reach the main port 4 and a flow of air coming from the second tank 2B is allowed to reach the main port 4.

According to the invention, in operation, the valve assembly 3 reversibly switches between the above-mentioned first and second operating conditions C1, C2 in response to feeding signals F1, F2 received from a power supply 50.

According to an important aspect of the invention, in operation, the valve assembly 3 is capable of stably maintaining the first operating condition C1 or the second operating condition C2 in case of outage of the power supply 50.

According to some embodiments of the invention (figures 6-7), the valve assembly 3 comprises first valve means 31 arranged at the first inlet 35 of the valve assembly 3, which receives air coming from the first tank 2A, and second valve means 32 arranged at the second inlet 36 of the valve assembly 3, which receives air coming from the second tank 2B.

According to these embodiments of the invention, the first and second valve means 31, 32 are mutually distinct.

In general, the first valve means 31 are adapted to allow or prevent air coming from the first tank 2A to reach the main port 4 while the second valve means 32 are adapted to allow or prevent air coming from the second tank 2B to reach the main port 4.

Preferably, the first valve means 31 can take a first position P1, which corresponds to a first condition C1 of the valve assembly 3 and in which air coming from the first tank 2A is allowed to reach said main port 4 (figure 6), or a second position P2, which corresponds to a second condition C2 of the valve assembly 3 and in which air coming from the first tank 2A is prevented to reach the main port 4.

Preferably, the first valve means 31 can reversibly switch between the first and second operating positions P1, P2 in response to first feeding signals F1 received from the above-mentioned power supply 50.

Preferably, the first valve means 31 can maintain stably the first operating position P1 or the second operating position P2 in case of outage of the power supply 50.

Preferably, the first valve means 31 comprise a first actuator 310 operatively coupled with a first valve element 311 arranged at the first inlet 35.

The first valve means 31 take the first operating position P1 when the first actuator 310 drives (in response to suitable first feeding signals F1) the first valve element 311 in such a way that this latter does not obstruct the first inlet 35.

The first valve means 31 take the second operating position P2 when the first actuator 310 drives (in response to suitable first feeding signals F1) the first valve element 311 in such a way that this latter obstructs the first inlet 35.

The actuator 310 is provided with a permanent magnet (not shown) as blocking means to block the first valve element 311 in the operating position so reached, when it is not feed by the first feeding signals F1. In this way, the first valve means 31 maintain stably the first operating position P1 or the second operating position P2 in case of outage of the power supply 50.

Preferably, the second valve means 32 can take a third operating position P3, which corresponds to a first condition C1 of the valve assembly 3 and in which a flow of air coming from the second tank 2B is prevented to reach said main port 4 (figure 6), or a fourth operating position P4, which corresponds to a second condition C2 of the valve assembly 3 and in which a flow of air coming from the second tank 2B is allowed to reach the main port 4.

Preferably, the second valve means 32 can switch reversibly between the third and fourth operating positions P3, P4 in response to second feeding signals F2 received from the above-mentioned power supply 50.

Preferably, the second valve means 32 can maintain stably the third operating position P3 or the fourth operating position P4 in case of outage of the power supply 50.

Preferably, the second valve means 32 comprise a second actuator 320 (which may be of known type) having a movable plunger linked to a second valve element 312 arranged at the second inlet 36.

The second valve means 32 take the third operating position P3 when the second actuator 320 drives (in response to suitable second feeding signals F2) the second valve element 322 in such a way that this latter obstructs the second inlet 36.

The second valve means 32 take the fourth operating position P4 when the second actuator 320 drives (in response to suitable second feeding signals F2) the second valve element 322 in such a way that this latter does not obstruct the second inlet 36.

The second valve means 32 maintain stably the third operating position P3 or the fourth operating position P4 when the actuator 320 is not fed by the second feeding signals F2, which occurs in case of outage of the power supply 50.

The second actuator 320 is provided with a permanent magnet (not shown) as blocking means to block the second valve element 322 in the operating position so reached, when it is not feed by the second feeding signals F2. In this way, the second valve means 32 maintain stably the third operating position P3 or the fourth operating position P4 in case of outage of the power supply 50.

The first and second valve means 31, 32 conveniently operate in dual manner in such a way to alternatively allow or prevent air coming from the first and second tanks 2A, 2B to reach the main port 4.

Thus, in operation, when the first valve means 31 take the first operating position P1, the second valve means 32 take the third operating position P3 (figure 6).

On the other hand, when the first valve means 31 take the second operating position P2, the second valve means 32 take the fourth operating position P4 (figure 7).

The actuators 310, 320 may be arranged according to solutions of known type.

For example, each actuator 310, 320 may be formed by a corresponding solenoid actuator including a movable plunger (not shown) operatively associated to the corresponding valve element 311, 322 and a suitable excitation winding (not shown) to provide a magnetic force to move (e.g. with a movement of linear type) said movable plunger in response to receiving the feeding signals F1 or F2 (preferably suitable excitation currents).

The blocking means of each solenoid actuator 310, 320 include suitable permanent magnets arranged in such a way to block the corresponding movable plunger in the operating position so reached, when said excitation winding is not fed by an excitation current.

Also the valve elements 311, 322 may be arranged according to solutions of known type. For example, each valve element 311, 322 may be formed by a shaped plate operatively coupled with the movable plunger of the corresponding solenoid actuator 310, 320 through a suitable kinematic chain.

According to other embodiments of the invention (figure 8-9), the valve assembly 3 may include third valve means 33 adapted to allow or prevent a flow of air coming from each tank 2A, 2B to reach the main port 4.

Preferably, the third valve means 33 can take a fifth operating position P5, which corresponds to a first condition C1 of the valve assembly 3 and in which a flow of air coming from the first tank 2A is allowed to reach the main port 4 and a flow of air coming from the second tank 2B is prevented to reach the main port 4 (figure 7), and a sixth operating position P6, which corresponds to a second condition C2 of the valve assembly 3 and in which a flow of air coming from the first tank 2A is prevented to reach the main port 4 and a flow of air coming from the second tank 2B is allowed to reach the main port 4 (figure 8).

Preferably, the third valve means 33 can switch reversibly between the fifth and sixth operating positions P5, P6 in response to third feeding signals F3 received from the above-mentioned power supply 50.

Preferably, the third valve means 33 can maintain stably the fifth operating position P5 or the sixth operating position P6 in case of outage of the power supply 50.

Preferably, the third valve means 33 comprise a third actuator 330 operatively coupled with a third valve element 333 arranged at the first inlet 35 and a fourth valve element 334 arranged at the first inlet 36.

The third valve means 33 take the fifth operating position P5 when the third actuator 330 drives (in response to suitable third feeding signals F3) the third valve element 333 in such a way that this latter does not obstruct the first inlet 35 and it drives the fourth valve element 334 in such a way that this latter obstructs the second inlet 36.

The third valve means 33 take the sixth operating position P6 when the third actuator 330 drives (in response to suitable third feeding signals F3) the third valve element 333 in such a way that this latter obstructs the first inlet 35 and it drives the fourth valve element 334 in such a way that this latter does not obstruct the second inlet 36.

The third actuator 330 is provided with a permanent magnet (not shown) as blocking means to block the third valve elements 333, 334 in the operating positions to reached, when it is not feed by the third feeding signals F3. In this way, the third valve means 33 maintain stably the fifth operating position P5 or the sixth operating position P6 in case of outage of the power supply 50.

The actuator 330 may be arranged according to solutions of known type.

For example, the solenoid actuator 33 may be formed by a solenoid actuator including a movable plunger (not shown) operatively associated to the corresponding valve elements 333, 334 and a pair of suitable excitation windings (not shown) to alternatively provide a magnetic force to move said movable plunger in response to receiving the feeding signals F3 (preferably suitable excitation currents).

The blocking means of the third solenoid actuator 330 include suitable permanent magnets arranged in such a way to block the movable plunger in a given operating position (corresponding to an operating position P5 or P6), when the excitation windings are not fed by an excitation current.

Also the valve elements 333, 334 may be arranged according to solutions of known type. For example, each valve element 333, 334 may be formed by a shaped plate operatively coupled with the movable plunger of the solenoid actuator 330 through a suitable kinematic chain. The operation of valve assembly 3 is briefly illustrated in the following.

It is supposed that the valve assembly 3 initially takes the first operating condition C1. In this case, a flow of air coming from the first tank 2A is allowed to reach the main port 4 and a flow of air coming from the second tank 2B is prevented to reach the main port 4.

The expansion vessel of the power electrical apparatus thus receives air dehumified by the first tank 2A of the breather device 1.

The valve assembly 3 can maintain stably the operating condition C1 until it receives suitable feeding signals F1 and F2 or F3 from the power supply 50.

In case of outage of the power supply 50, the valve assembly 3 does not change the operating condition C1 and dehumified air coming from the first tank 2A keeps on reaching the main port 4 and the expansion vessel of the power electrical apparatus. On the other hand, air coming from the second tank 2B cannot reach the expansion vessel of the power electrical apparatus. When air-drying salts contained in the first tank 2A reach a saturation condition, the valve assembly 3 switch between from first operating condition C1 to the operating condition C2 in response to feeding signals F1 and F2 or F3 received from the power supply 50.

In this case, a flow of air coming from the first tank 2A is prevented to reach the main port 4 and a flow of air coming from the second tank 2B is allowed to reach the main port 4.

The expansion vessel of the power electrical apparatus thus receives air dehumified by the second tank 2B of the breather device 1. At the same time, air-drying salts contained in the second tank 2B may thus be subject to a regeneration process or be replaced.

In case of outage of the power supply 50, the valve assembly 3 does not change the operating condition C2 and dehumified air coming from the second tank 2B keeps on reaching the main port 4 and the expansion vessel of the power electrical apparatus. On the other hand, air coming from the first tank 2A (which might be humid as the first tank 2A may still contain saturated air-drying salts) cannot reach the expansion vessel of the power electrical apparatus.

It is evident from the above that, according to the invention, the valve assembly 3 ensures the segregation of the tank 2A or 2B possibly containing saturated air-drying salts from the expansion vessel of the power electrical apparatus also in emergency condition, in particular when the power supply 50 is subject to an outage.

This solution is particularly useful in railway installations, when the power electrical apparatus on board a train may be periodically switched off when the train does not operate or during maintenance interventions.

According to preferred embodiments of the invention, the valve assembly 3 is arranged along a lateral wall of the air demoisturizer unit 2, particularly along a direction parallel to the main longitudinal axis 500 of the air demoisturizer unit.

This solution allows increasing the useful volume of the tanks 2A, 2B to accommodate air-drying salts without having relevant increases of the overall size of the breather device. Preferably, the valve assembly 3 comprises an enclosure 35 accommodating the valve means 31 and 32 or 33 and it is fixed in a known manner to the main enclosure 29 of the air demoisturizer unit 2.

Conveniently, the enclosure 35 is provided with holes (not shown) to allow the passage of shaped ducts 6, 7 and 8 and of second holes 36 to allow the passage of electrical connections with the power supply 50 or, more in general, with a power and control unit.

According to some embodiments of the invention, the air demoisturizer unit 2 comprises suitable sensing means (not shown) configured to detect a saturation level of the moisture absorbing substance accommodated in the internal volume 20 of each tank 2A, 2B. Preferably, such sensing means comprise a load cell sensor (which may be of known type) accommodated in the internal volume 20 of each tank 2A, 2B.

According to preferred embodiments of the invention, the breather device 1 includes or is operatively coupled to a power and control unit (not shown).

Conveniently, said power and control unit is configured to provide driving functionalities of electromagnetic, electric and/or electronic equipment of the breather device 1.

In particular, said power and control unit is configured to provide the power supply 50 to feed the valve assembly 3 with suitable feeding signals F1 and F2 or F3.

Said power and control unit may be advantageously configured to provide diagnostic functionalities and control functionalities for properly managing the operating life of the breather device 1.

Preferably, said power and control unit 50 is operatively coupled to above-mentioned sensing means to receive and process detection signals indicative of the saturation level of the moisture absorbing substance accommodated in the internal volume 20 of each tank 2A, 2B. Preferably, said power and control unit is operatively coupled to possible heaters 23 of the air demoisturizer unit 2 to provide suitable feeding signals to activate said heaters.

Preferably, said power and control unit comprises digital data processing resources (e.g. one or more microprocessors) and one or more power circuits to carry out its functionalities.

In general, said power and control unit may be realized according to solutions of known type, which are not described here in further details, for the sake of brevity.

The breather device 1, according to the invention, provides relevant advantages with respect to corresponding detection devices of the state of the art.

The breather device 1 ensures that the expansion vessel continuously receives dehumified air even in emergency conditions, for example when the valve means 3 cannot properly operate due to an outage of the power supply 50.

This represents a relevant improvement with respect to solutions of the state of the art, in which dehumidifying functionalities are generally severely jeopardized by possible outages of the power supply feeding the main valve assembly of the breather device.

The breather device 1 has a simple and compact structure and it may be easily installed on the field, even for retrofitting purposes.

The breather device 1 can be easily manufactured at industrial level with production costs quite competitive with respect to traditional devices of the same type.

## Claims

1. A breather device (1) for dehumidifying air to be supplied into an expansion vessel of a power electrical apparatus, said breather device comprising:
- an air demoisturizer unit (2) including a first tank (2A) and a second tank (2B), each tank having an internal volume (20) accommodating a moisture absorbing substance and being in fluid-dynamic communication with the external environment;
- a main port (4) adapted to be in fluid-dynamic communication with said expansion vessel;
- a valve assembly (3) in fluid-dynamic communication with each tank (2A, 2B) and said main port (4);
wherein said valve assembly is adapted to take a first operating condition (C1), in which said valve assembly allows air coming from the first tank (2A) to reach said main port (4) and said valve assembly prevents air coming from the second tank (2B) to reach said main port (4), or a second operating condition (C2), in which said valve assembly prevents air coming from the first tank (2A) to reach said main port (4) and said valve assembly allows air coming from the second tank (2B) to reach said main port (4),
wherein said valve assembly (3) is adapted to switch reversibly between said first and second operating conditions (C1, C2) in response to feeding signals (F1, F2, F3) received from a power supply (50),
**characterized in that** said valve assembly comprises valve means (31, 32, 33) which comprise actuators (310, 320, 330) operatively coupled to valve elements (311, 322, 333, 334) arranged at the inlets (35, 36) of said valve assembly (3) and **characterized in that** said actuators (310, 320, 330) are provided with a permanent magnet as blocking means to block said valve elements (311, 322, 333) in said first or second operating condition (C1, C2) so reached, in order to stably maintain said first or second operating condition (C1, C2) in case of outage of said power supply (50).

2. Breather device, according to claim 1, **characterised in that** said valve assembly (3) comprises:
- first valve means (31) adapted to take a first position (P1) corresponding to said first operating condition (C1) of said valve assembly (3), in which said first valve means (31) allow air coming from the first tank (2A) to reach said main port (4), or a second position (P2) corresponding to said second operating condition (C2) of said valve assembly (3), in which said first valve means (31) prevent air coming from the first tank (2A) to reach said main port (4),
wherein said first valve means (31) are adapted to switch reversibly between said first position (P1) and said second position (P2) in response to first feeding signals (F1) received from said power supply (50),
wherein said first valve means (31) are adapted to maintain stably said first position (P1) or said second position (P2) in case of outage of said power supply (50).
- second valve means (32) adapted to take a third position (P3) corresponding to a first operating condition (C1) of said valve assembly (3), in which said second valve means (32) prevent air coming from the second tank (2B) to reach said main port (4), or a fourth position (P4) corresponding to a second operating condition (C2) of said valve assembly (3), in which said second valve means (32) allow air coming from the second tank (2B) to reach said main port (4);
wherein said second valve means (32) are adapted to switch reversibly between said third position (P3) and said fourth position (P4) in response to second feeding signals (F2) received from said power supply (50),
wherein said second valve means (32) are adapted to maintain stably said third position (P3) or said fourth position (P4) in case of outage of said power supply (50).

3. Breather device, according to claim 2, **characterised in that** said first valve means (31) comprise a first actuator (310) operatively coupled to a first valve element (311) arranged at a first inlet (35) of said valve assembly.

4. Breather device, according to claim 3, **characterised in that** said first actuator (310) is a solenoid actuator.

5. Breather device, according to one of the claims from 2 to 4, **characterised in that** said second valve means (32) comprise a second actuator (320) operatively coupled to a second valve element (322) arranged at a second inlet (36) of said valve assembly.

6. Breather device, according to claim 5, **characterised in that** said second actuator (320) is a solenoid actuator.

7. Breather device, according to claim 1, **characterised in that** said valve assembly (3) comprises one valve means (33) adapted to take a first position (P5) corresponding to said first operating condition (C1) of said valve assembly (3), in which said valve means (33) allow air coming from the first tank (2A) to reach said main port (4) and said valve means (33) prevent air coming from the second tank (2B) to reach said main port (4), or a second position (P6) corresponding to said second operating condition (C2) of said valve assembly (3), in which said valve means (33) prevent air coming from the first tank (2A) to reach said main port (4) and said valve means (33) allow air coming from the second tank (2B) to reach said main port (4),
wherein said valve means (33) are adapted to switch reversibly between said first position (P5) and said second position (P6) in response to feeding signals (F3) received from said power supply (50),
wherein said valve means (33) are adapted to maintain stably said first position (P5) or said second position (P6), in case of outage of said power supply (50).

8. Breather device, according to claim 7, **characterised in that** said valve means (33) comprise an actuator (330) operatively coupled to valve elements (333, 334) arranged at first and second inlets (35, 36) of said valve assembly (3).

9. Breather device, according to claim 8, **characterised in that** said actuator (330) is a solenoid actuator.

10. Breather device, according to one or more of the previous claims, **characterised in that** said valve assembly (3) is arranged along a lateral wall of said air demoisturizer unit (2).

11. A power electrical apparatus (100) for electric power transmission and distribution installations **characterised in that** it comprises at least a breather device (1), according to one or more of the previous claims.

12. A power electrical apparatus, according to claim 11, **characterised in that** it is a power transformer for railway installations.

## Patentansprüche

1. Entlüftungsvorrichtung (1) zum Trocknen von Luft, die in einen Entspannungsbehälter einer elektrischen Leistungseinrichtung gespeist wird, wobei die Entlüftungsvorrichtung Folgendes umfasst:
- eine Luftentfeuchtungseinheit (2), die einen ersten Tank (2A) und einen zweiten Tank (2B) beinhaltet, wobei jeder Tank ein Innenvolumen (20) aufweist, das eine feuchtigkeitsabsorbierende Substanz beherbergt, und in fluiddynamischer Verbindung mit der Außenumgebung steht;
- einen Hauptanschluss (4), der angepasst ist, in fluiddynamischer Verbindung mit dem Entspannungsbehälter zu stehen;
- eine Ventilbaugruppe (3) in fluiddynamischer Verbindung mit jedem Tank (2A, 2B) und dem Hauptanschluss (4);
wobei die Ventilbaugruppe angepasst ist, einen ersten Betriebszustand (C1) anzunehmen, in dem die Ventilbaugruppe von dem ersten Tank (2A) kommender Luft gestattet, den Hauptanschluss (4) zu erreichen, und die Ventilbaugruppe von dem zweiten Tank (2B) kommende Luft daran hindert, den Hauptanschluss (4) zu erreichen, oder einen zweiten Betriebszustand (C2), in dem die Ventilbaugruppe von dem ersten Tank (2A) kommende Luft daran hindert, den Hauptanschluss (4) zu erreichen, und die Ventilbaugruppe von dem zweiten Tank (2B) kommender Luft gestattet, den Hauptanschluss (4) zu erreichen,
wobei die Ventilbaugruppe (3) angepasst ist, umschaltbar zwischen dem ersten und dem zweiten Betriebszustand (C1, C2) in Reaktion auf Eingangssignale (F1, F2, F3), die von einer Leistungsversorgung (50) empfangen werden, zu wechseln,
**dadurch gekennzeichnet, dass** die Ventilbaugruppe Ventilmittel (31, 32, 33) umfasst, die Aktoren (310, 320, 330) umfassen, die betriebsfähig mit Ventilelementen (311, 322, 333, 334) gekoppelt sind, die bei den Einlässen (35, 36) der Ventilbaugruppe (3) eingerichtet sind, und **dadurch gekennzeichnet, dass** die Aktoren (310, 320, 330) mit einem Permanentmagneten als Blockiermittel bereitgestellt sind, um die Ventilelemente (311, 322, 333) in dem so erreichten ersten oder zweiten Betriebszustand (C1, C2) zu blockieren, um den ersten oder den zweiten Betriebszustand (C1, C2) im Fall von Ausfall der Leistungsversorgung (50) stabil beizubehalten.

2. Entlüftungsvorrichtung nach Anspruch 1, **dadurch gekennzeichnet, dass** die Ventilbaugruppe (3) umfasst:
- erste Ventilmittel (31), die angepasst sind, eine erste Position (P1) entsprechend dem ersten Betriebszustand (C1) der Ventilbaugruppe (3) einzunehmen, in der die ersten Ventilmittel (31) von dem ersten Tank (2A) kommender Luft gestatten, den Hauptanschluss (4) zu erreichen, oder eine zweite Position (P2) entsprechend dem zweiten Betriebszustand (C2) der Ventilbaugruppe (3), in der die ersten Ventilmittel (31) von dem ersten Tank (2A) kommende Luft daran hindern, den Hauptanschluss (4) zu erreichen,
wobei die ersten Ventilmittel (31) angepasst sind, umschaltbar zwischen der ersten Position (P1) und der zweiten Position (P2) in Reaktion auf erste Eingangssignale (F1) zu wechseln, die von der Leistungsversorgung (50) empfangen werden,
wobei die ersten Ventilmittel (31) angepasst sind, die erste Position (P1) oder die zweite Position (P2) im Fall von Ausfall der Leistungsversorgung (50) stabil beizubehalten;
- zweite Ventilmittel (32), die angepasst sind, eine dritte Position (P3) entsprechend einem ersten Betriebszustand (C1) der Ventilbaugruppe (3) einzunehmen, in der die zweiten Ventilmittel (32) von dem zweiten Tank (2B) kommende Luft daran hindern, den Hauptanschluss (4) zu erreichen, oder eine vierte Position (P4) entsprechend einem zweiten Betriebszustand (C2) der Ventilbaugruppe (3), in der die zweiten Ventilmittel (32) von dem zweiten Tank (2B) kommender Luft gestatten, den Hauptanschluss (4) zu erreichen;
wobei die zweiten Ventilmittel (32) angepasst sind, umschaltbar zwischen der dritten Position (P3) und der vierten Position (P4) in Reaktion auf zweite Eingangssignale (F2) zu wechseln, die von der Leistungsversorgung (50) empfangen werden,
wobei die zweiten Ventilmittel (32) angepasst sind, die dritte Position (P3) oder die vierte Position (P4) im Fall von Ausfall der Leistungsversorgung (50) stabil beizubehalten.

3. Entlüftungsvorrichtung nach Anspruch 2, **dadurch gekennzeichnet, dass** die ersten Ventilmittel (31) einen ersten Aktor (310) umfassen, der betriebsfähig mit einem ersten Ventilelement (311) gekoppelt ist, das bei einem ersten Einlass (35) der Ventilbaugruppe eingerichtet ist.

4. Entlüftungsvorrichtung nach Anspruch 3, **dadurch gekennzeichnet, dass** der erste Aktor (310) ein Solenoidaktor ist.

5. Entlüftungsvorrichtung nach einem der Ansprüche 2 bis 4, **dadurch gekennzeichnet, dass** die zweiten Ventilmittel (32) einen zweiten Aktor (320) umfassen, der betriebsfähig mit einem zweiten Ventilelement (322) gekoppelt ist, das bei einem zweiten Einlass (36) der Ventilbaugruppe eingerichtet ist.

6. Entlüftungsvorrichtung nach Anspruch 5, **dadurch gekennzeichnet, dass** der zweite Aktor (320) ein Solenoidaktor ist.

7. Entlüftungsvorrichtung nach Anspruch 1, **dadurch gekennzeichnet, dass** die Ventilbaugruppe (3) ein Ventilmittel (33) umfasst, das angepasst ist, eine erste Position (P5) entsprechend dem ersten Betriebszustand (C1) der Ventilbaugruppe (3) einzunehmen, in der die Ventilmittel (33) von dem ersten Tank (2A) kommender Luft gestatten, den Hauptanschluss (4) zu erreichen, und die Ventilmittel (33) von dem zweiten Tank (2B) kommende Luft daran hindern, den Hauptanschluss (4) zu erreichen, oder eine zweite Position (P6) entsprechend dem zweiten Betriebszustand (C2) der Ventilbaugruppe (3), in der die Ventilmittel (33) von dem ersten Tank (2A) kommende Luft daran hindern, den Hauptanschluss (4) zu erreichen, und die Ventilmittel (33) von dem zweiten Tank (2B) kommender Luft gestatten, den Hauptanschluss (4) zu erreichen,
wobei die Ventilmittel (33) angepasst sind, umschaltbar zwischen der ersten Position (P5) und der zweiten Position (P6) in Reaktion auf Eingangssignale (F3) zu wechseln, die von der Leistungsversorgung (50) empfangen werden,
wobei die Ventilmittel (33) angepasst sind, die erste Position (P5) oder die zweite Position (P6) im Fall von Ausfall der Leistungsversorgung (50) stabil beizubehalten.

8. Entlüftungsvorrichtung nach Anspruch 7, **dadurch gekennzeichnet, dass** die Ventilmittel (33) einen Aktor (330) umfassen, der betriebsfähig mit Ventilelementen (333, 334) gekoppelt ist, die bei ersten und zweiten Einlässen (35, 36) der Ventilbaugruppe (3) eingerichtet sind.

9. Entlüftungsvorrichtung nach Anspruch 8, **dadurch gekennzeichnet, dass** der Aktor (330) ein Solenoidaktor ist.

10. Entlüftungsvorrichtung nach einem oder mehreren der vorstehenden Ansprüche, **dadurch gekennzeichnet, dass** die Ventilbaugruppe (3) entlang einer Seitenwand der Luftentfeuchtungseinheit (2) eingerichtet ist.

11. Elektrische Leistungseinrichtung (100) für Anlagen zum Übertragen und Verteilen von elektrischer Leistung, **dadurch gekennzeichnet, dass** sie mindestens eine Entlüftungsvorrichtung (1) nach einem oder mehreren der vorstehenden Ansprüche umfasst.

12. Elektrische Leistungseinrichtung nach Anspruch 11, **dadurch gekennzeichnet, dass** sie ein Leistungstransformator für Gleisanlagen ist.

## Revendications

1. Dispositif reniflard (1) pour assécher l'air à acheminer dans un vase d'expansion d'un appareil électrique de puissance, ledit dispositif reniflard comprenant :
- une unité de déshumidification d'air (2) incluant un premier réservoir (2A) et un second réservoir (2B), chaque réservoir présentant un volume interne (20) logeant une substance absorbant l'humidité et étant en communication fluidique dynamique avec l'environnement extérieur ;
- un orifice principal (4) conçu pour être en communication fluidique dynamique avec ledit vase d'expansion ;
- un ensemble soupape (3) en communication fluidique dynamique avec chaque réservoir (2A, 2B) et ledit orifice principal (4) ;
dans lequel ledit ensemble soupape est conçu pour adopter une première condition de fonctionnement (C1), dans laquelle ledit ensemble soupape permet à l'air provenant du premier réservoir (2A) d'atteindre ledit orifice principal (4) et ledit ensemble soupape empêche l'air provenant du second réservoir (2B) d'atteindre ledit orifice principal (4), ou une seconde condition de fonctionnement (C2), dans laquelle ledit ensemble soupape empêche l'air provenant du premier réservoir (2A) d'atteindre ledit orifice principal (4) et ledit ensemble soupape permet à l'air provenant du second réservoir (2B) d'atteindre ledit orifice principal (4),
dans lequel ledit ensemble soupape (3) est conçu pour commuter de manière réversible entre lesdites première et seconde conditions de fonctionnement (C1, C2) en réponse à des signaux d'alimentation (F1, F2, F3) reçus en provenance d'une alimentation électrique (50),
**caractérisé en ce que** ledit ensemble soupape comprend des moyens formant soupape (31, 32, 33) qui comprennent des actionneurs (310, 320, 330) couplés opérationnellement aux éléments de soupape (311, 322, 333, 334) agencés au niveau des entrées (35, 36) dudit ensemble soupape (3) et **caractérisé en ce que** lesdits actionneurs (310, 320, 330) sont dotés d'un aimant permanent comme moyen de blocage pour bloquer lesdits éléments de soupape (311, 322, 333) dans ladite première ou seconde condition de fonctionnement (C1, C2) à atteindre, afin de conserver de manière stable ladite première ou seconde condition de fonctionnement (C1, C2) en cas de panne de ladite alimentation électrique (50).

2. Dispositif reniflard, selon la revendication 1, **caractérisé en ce que** ledit ensemble soupape (3) comprend :
- des premiers moyens formant soupape (31) conçus pour adopter une première position (P1) correspondant à ladite première condition de fonctionnement (C1) dudit ensemble soupape (3), dans laquelle lesdits premiers moyens formant soupape (31) permettent à l'air provenant du premier réservoir (2A) d'atteindre ledit orifice principal (4), ou une deuxième position (P2) correspondant à ladite seconde condition de fonctionnement (C2) dudit ensemble soupape (3), dans laquelle lesdits premiers moyens formant soupape (31) empêchent l'air provenant du premier réservoir (2A) d'atteindre ledit orifice principal (4),
dans lequel lesdits premiers moyens formant soupape (31) sont conçus pour commuter de manière réversible entre ladite première position (P1) et ladite deuxième position (P2) en réponse à des premiers signaux d'alimentation (F1) reçus en provenance de ladite alimentation électrique (50),
dans lequel lesdits premiers moyens formant soupape (31) sont conçus pour maintenir de manière stable ladite première position (P1) ou ladite deuxième position (P2) en cas de panne de ladite alimentation électrique (50),
- des seconds moyens formant soupape (32) conçus pour adopter une troisième position (P3) correspondant à une première condition de fonctionnement (C1) dudit ensemble soupape (3), dans laquelle lesdits seconds moyens formant soupape (32) empêchent l'air provenant du second réservoir (2B) d'atteindre ledit orifice principal (4), ou une quatrième position (P4) correspondant à une seconde condition de fonctionnement (C2) dudit ensemble soupape (3), dans laquelle lesdits seconds moyens formant soupape (32) permettent à l'air provenant du second réservoir (2B) d'atteindre ledit orifice principal (4) ;
dans lequel lesdits seconds moyens formant soupape (32) sont conçus pour commuter de manière réversible entre ladite troisième position (P3) et ladite quatrième position (P4) en réponse à des seconds signaux d'alimentation (F2) reçus en provenance de ladite alimentation électrique (50),
dans lequel lesdits seconds moyens formant soupape (32) sont conçus pour maintenir de manière stable ladite troisième position (P3) ou ladite quatrième position (P4) en cas de panne de ladite alimentation électrique (50).

3. Dispositif reniflard, selon la revendication 2, **caractérisé en ce que** lesdits premiers moyens formant soupape (31) comprennent un premier actionneur (310) couplé opérationnellement à un premier élément de soupape (311) agencé au niveau d'une première entrée (35) dudit ensemble soupape.

4. Dispositif reniflard, selon la revendication 3, **caractérisé en ce que** ledit premier actionneur (310) est un actionneur à solénoïde.

5. Dispositif reniflard, selon l'une des revendications 2 à 4, **caractérisé en ce que** lesdits seconds moyens formant soupape (32) comprennent un second actionneur (320) couplé opérationnellement à un second élément de soupape (322) agencé au niveau d'une seconde entrée (36) dudit ensemble soupape.

6. Dispositif reniflard, selon la revendication 5, **caractérisé en ce que** ledit second actionneur (320) est un actionneur à solénoïde.

7. Dispositif reniflard, selon la revendication 1, **caractérisé en ce que** ledit ensemble soupape (3) comprend des moyens formant soupape (33) uniques conçus pour adopter une première position (P5) correspondant à ladite première position de fonctionnement (C1) dudit ensemble soupape (3), dans laquelle lesdits moyens formant soupape (33) permettent à l'air provenant du premier réservoir (2A) d'atteindre ledit orifice principal (4) et lesdits moyens formant soupape (33) empêchent l'air provenant du second réservoir (2B) d'atteindre ledit orifice principal (4), ou une deuxième position (P6) correspondant à ladite seconde condition de fonctionnement (C2) dudit ensemble soupape (3), dans laquelle lesdits moyens formant soupape (33) empêchent l'air provenant du premier réservoir (2A) d'atteindre ledit orifice principal (4) et lesdits moyens formant soupape (33) permettent à l'air provenant du second réservoir (2B) d'atteindre ledit orifice principal (4),
dans lequel lesdits moyens formant soupape (33) sont conçus pour commuter de manière réversible entre ladite première position (P5) et ladite deuxième position (P6) en réponse à des signaux d'alimentation (F3) reçus en provenance de ladite alimentation électrique (50),
dans lequel lesdits moyens formant soupape (33) sont conçus pour maintenir de manière stable ladite première position (P5) ou ladite deuxième position (P6), en cas de panne de ladite alimentation électrique (50).

8. Dispositif reniflard, selon la revendication 7, **caractérisé en ce que** lesdits moyens formant soupape (33) comprennent un actionneur (330) couplé opérationnellement à des éléments de soupape (333, 334) agencés au niveau de première et seconde entrées (35, 36) dudit ensemble soupape (3).

9. Dispositif reniflard, selon la revendication 8, **caractérisé en ce que** ledit actionneur (330) est un actionneur à solénoïde.

10. Dispositif reniflard, selon une ou plusieurs des revendications précédentes, **caractérisé en ce que** ledit ensemble soupape (3) est agencé le long d'une paroi latérale de ladite unité de déshumidification d'air (2).

11. Appareil électrique de puissance (100) pour des installations de transmission et de distribution de puissance électrique **caractérisé en ce qu'**il comprend au moins un dispositif reniflard (1), selon une ou plusieurs des revendications précédentes.

12. Appareil électrique de puissance, selon la revendication 11, **caractérisé en ce qu'**il est un transformateur de puissance pour des installations ferroviaires.
